Europäisches Patentamt

European Patent Office

Office européen des brevets

(19)

(11) Veröffentlichungsnummer: **0 110 890**
**B1**

# EUROPÄISCHE PATENTSCHRIFT

(45) Veröffentlichungstag der Patentschrift:
**22.04.87**

(21) Anmeldenummer: **83900896.8**

(22) Anmeldetag: **24.03.83**

(86) Internationale Anmeldenummer:
**PCT/CH 83/00038**

(87) Internationale Veröffentlichungsnummer:
**WO 83/04309  (08.12.83** Gazette 83/28)

(51) Int. Cl.⁴: **G 01 N  1/28,** B 01 D  29/02,
**G 01 N  35/00**

(54) **VORRICHTUNG ZUR AUTOMATISCHEN HERSTELLUNG EINER REIHE VON PROBEN FÜR DIE ANALYSE VON GEMENGEN.**

(30) Priorität: **05.06.82  CH 3485/82**

(43) Veröffentlichungstag der Anmeldung:
**20.06.84 Patentblatt 84/25**

(45) Bekanntmachung des Hinweises auf die Patenterteilung:
**22.04.87 Patentblatt 87/17**

(84) Benannte Vertragsstaaten:
**DE FR GB**

(56) Entgegenhaltungen:
**DE - A - 2 241 646**
**US - A - 3 244 287**
**US - A - 3 923 463**
**US - A - 4 167 875**

(73) Patentinhaber: **ISMATEC SA, Limmatstrasse 107/109,
CH-8031 Zürich (CH)**

(72) Erfinder: **ACKERMANN, Fritz, Limmatstrasse 109,
CH-8031 Zürich (CH)**
Erfinder: **BILL, Anton, Weberstrasse 9, CH-8004 Zürich
(CH)**

(74) Vertreter: **Sax, Walter F., Patentanwälte R.A. Maspoli
und Partner Promenadengasse 18, CH-8001 Zürich (CH)**

## Beschreibung

Die Erfindung betrifft eine Vorrichtung zur automatischen Herstellung einer Reihe von Proben in zeitlicher Folge für die Analyse von Gemengen, bei der das jeweilige Gemenge einem Gefäss mit flüssigem Probenansatz entnommen und auf einen schrittweise fortbewegten Filterstreifen stellenweise abgesetzt, das Filtrat von der Rückseite des Filterstreifens abgesaugt und der Filterrückstand für die Analyse präpariert wird.

Derartige Vorrichtungen werden z.B. für die Zubereitung von Proben für immunologische Analysen oder für die Analyse von Schwebestoffen in Flüssigkeiten oder Gasen verwendet.

Bei einer bekannten Vorrichtung dieser Art dient zur Herstellung der Proben ein Filterstreifen, der auf einem stellenweise mit Fenstern versehenen Trägerband aus stabilem Material angebracht ist. Die Proben können durch beidseitige Abdeckung gegen Kontamination gesichert und durch Aufrollen des Trägerbandes gespeichert werden. Ein solcher Filterstreifen mit Trägerband eignet sich allerdings nur für trockene Proben und ist überdies sehr aufwendig in bezug auf Material und Herstellung. Ferner wird in dieser Vorrichtung das Gemenge zum Filtrieren auf den Filterstreifen aufpipettiert. Ohne Anwendung besonderer Schutzmassnahmen besteht dabei eine gewisse Kontaminationsgefahr. Ausserdem ist für die Zufuhr des Gemenges zur Pipette eine zusätzliche Förderpumpe erforderlich. Dadurch wird der Zufuhrweg verlängert und damit sowie wegen der Verwendung langsam arbeitender Schlauchpumpen die Dauer des Gemengetransports erhöht, was in gewissen Fällen zu fehlerhaften Veränderungen des Probenansatzes führen kann. Daneben erfordert ein längerer Zufuhrweg auch einen vermehrten Aufwand zu dessen Reinigung zwischen den aufeinanderfolgenden Probendurchsätzen.

Die Aufgabe der Erfindung besteht darin, eine Vorrichtung der eingangs genannten Art anzugeben, die es ermöglicht, unter Vermeidung der erwähnten Nachteile und mit einfacheren und weniger aufwendigen Mitteln Proben für Gemengeanalysen herzustellen und dabei kürzere Durchsatzeiten und eine Verringerung der Kontaminationsgefahr zu erreichen.

Diese Aufgabe wird durch die im Patentanspruch angegebenen Merkmale gelöst.

Durch die Beförderung des Gemenges mit Hilfe der am Filterausgang wirkenden Saugkraft entfällt die Förderpumpe im Zuführweg. Dieser kann dadurch kürzer gehalten werden, was einen schnelleren Durchsatz ermöglicht und die Reinigung erleichtert. Die jeweils vollständige Abdichtung an der Filterstelle bietet Schutz gegen jeglichen Stoffaustausch mit der Umgebung. Die Filterstellen enthaltenden Teile des Filterstreifens werden jeweils nach dem Absetzen des Gemenges ausgestanzt und in Probengefässe übergeführt. An die Festigkeit des Filterstreifens werden deshalb weniger hohe Anforderungen gestellt als im Falle einer Aufbewahrung des ganzen Filterstreifens mit den damit verbundenen mechanischen Beanspruchungen, weshalb auf ein Trägerband verzichtet werden kann.

Es ist zwar auch ein Verfahren bekannt, das mit nicht verstärkten Filterstreifen arbeitet, wobei jedoch die mit belegten Filterstellen versehenen Filterstreifen von Hand in Teile mit je einer Filterstelle zerschnitten und in die Probengefässe eingebracht werden. Verunreinigungen und Fehler sind bei diesem Verfahren jedoch kaum zu vermeiden, und die Handhabung ist umständlich und zeitraubend.

Aus der US-Patentschrift Nr. 4 167 875 ist eine Vorrichtung zur Herstellung einer Reihe von Proben in zeitlicher Folge für die Analyse von Gemengen bekannt, bei der das jeweilige Gemenge einem Gefäss mit flüssigem Probenansatz entnommen und auf ein Filterscheibchen abgesetzt und das Filtrat von der Rückseite des Filterscheibchens abgesaugt wird. Dazu weist die Vorrichtung eine Einrichtung zur aufeinanderfolgenden Entnahme der Probenansätze aus einer Reihe von Gefässen, eine Stanzeinrichtung mit einer Führungsbahn zum Einlegen eines schrittweise vorzuschiebenden Filterstreifens und eine mit der Stanzeinrichtung kombinierte Filtriereinrichtung auf. Letztere umfasst einen unterhalb der Führungsbahn angeordneten Saugkopf und eine oberhalb der Führungsbahn, gegenüber dem Saugkopf angeordnete, heb- und senkbare Glocke, die mit der Entnahmeeinrichtung über eine Leitung verbunden ist. Beim Absenken der zugleich als Stanzstempel ausgebildeten Glocke wird ein Filterscheibchen aus dem Filterstreifen ausgestanzt und gegen den Saugkopf gedrückt, so dass die Filterstelle für den sich anschliessenden Filtriervorgang beidseitig abgedichtet ist. Das mit dem Filterrückstand belegte Filterscheibchen kann nach Anheben der Glocke der Filtriereinrichtung entnommen werden.

Die Vorrichtung nach der US-Patentschrift Nr. 4 167 875 bietet zwar ebenfalls den Vorteil, dass die Probenansätze durch die Filtriereinrichtung direkt aus den Probengefässen angesaugt werden und keine dazwischen liegende Förderpumpe erforderlich ist. Hingegen eignet sich diese Vorrichtung nicht für eine Automatisierung der Probenherstellung. Dazu fehlen ihr insbesondere Mittel zur Beförderung der mit dem Filterrückstand belegten Filterscheibchen auf abgeschirmtem Weg in einen Reaktionsbehälter. Die Filterscheibchen werden im Gegenteil durch Anheben der Glocke nach der Filtration einfach freigelegt, und da sie keine Transportträger mehr haben, bleiben sie entweder am Saugkopf oder am Öffnungsrand der Glocke haften. Dies erschwert die Entnahme der Filterscheibchen. Ausserdem sind Verunreinigungen und Fehler bei der Weiterbehandlung der Filterrückstände in dieser Phase kaum vermeidbar.

Bei der erfindungsgemässen Vorrichtung wird dagegen die den Filterrückstand aufweisende Filterstelle auf dem schrittweise fortzubewegenden Filterstreifen von der Filtriereinrichtung auf abgeschirmtem Weg zu einer örtlich von dieser getrennten Stanzeinrichtung überführt, wo ein diese Filterstelle enthaltendes Filterscheibchen aus dem Filterstreifen ausgestanzt und in ein Probenaufnahmegefäss gestossen wird. Die örtliche Trennung der Stanzeinrichtung von der Filtriereinrichtung ermöglicht mit einfachen Mitteln einen automatischen Betrieb der Vorrichtung, und zwar unter Vermeidung der bei der zuvor beschriebenen Vorrichtung bestehenden Kontaminationsgefahr.

Die US-Patentschrift Nr. 3 244 287 beschreibt eine Filtrierstation zur automatischen Herstellung einer Reihe von Proben in zeitlicher Folge für die Analyse von Gemengen, bei der das jeweilige Gemenge auf einen kontinuierlich fortbewegten Filterstreifen stellenweise abgesetzt, das Filtrat von der Rückseite des Filterstreifens abgesaugt und der Filterrückstand für die Analyse präpariert wird. Ein Saugkopf zum gleichzeitigen Ansaugen und Filtrieren der Gemenge ist bei dieser Vorrichtung jedoch nicht vorgesehen, ebensowenig wie das Ausstanzen von die einzlenen Proben enthaltenden Filterscheibchen und deren unmittelbare Überführung in Reaktionsbehälter. Die Proben werden vielmehr am Filterstreifen getrocknet und verschlossen, um den Filterstreifen mit den versiegelten Proben gesamthaft an eine entferne Stelle zur Analyse befördern zu können. Dieses Verfahren ist aber für die Herstellung von Proben, bei der die Zufuhr der Reaktionsflüssigkeit an die Zubereitung des Probenansatzes zeitlich gebunden ist, z.B. in Verbindung mit Reaktionsablaufmessungen, ungeeignet.

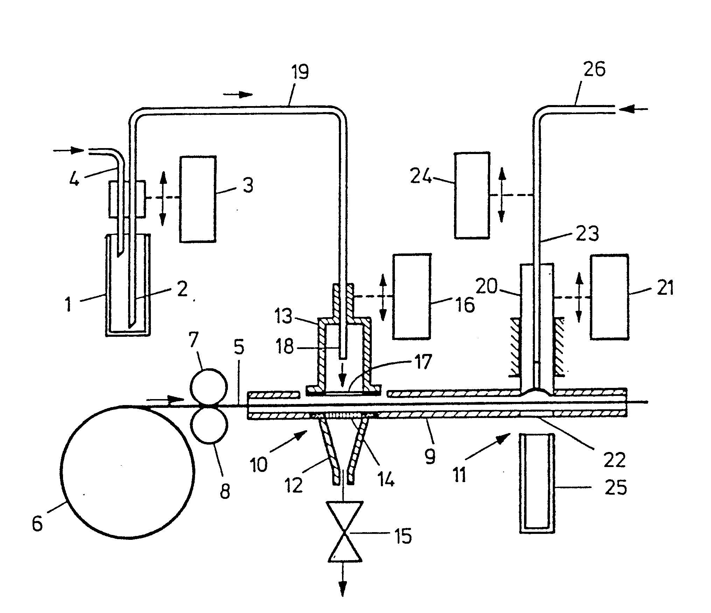

In der Zeichnung ist ein Ausführungsbeispiel der erfindungsgemässen Vorrichtung schematisch dargestellt. Es kann sich dabei um eine separat aufgebaute Filtrierstation handeln, die in einer automatisch arbeitenden Analysenanlage für Reihenanalysen eingesetzt werden kann.

Die vorbereiteten und gegebenenfalls vorbehandelten Probenansätze befinden sich in offenen oder geschlossenen Gefässen, die z.B. in einer Kette schrittweise fortbewegt und nacheinander der dargestellten Filtrierstation zugeführt werden. Nach der Zeichnung befindet sich ein solches Probenansatzgefäss 1 an der für die Probenentnahme bestimmten Stelle.

Zur aufeinanderfolgenden Entnahme der Probenansätze aus den Ansatzgefässen dient eine Entnahmevorrichtung mit einer heb- und senkbaren Kanüle 2, die mit einem Hubmotor 3 verbunden ist. Mit der Kanüle 2 ist eine Pipette 4 mechanisch verbunden, über welche allfällige Zugaben und die Reinigungsflüssigkeit zugeführt werden.

Der Filterstreifen 5, z.B. aus Glasfaserpapier, wird einer Rolle 6 entnommen und mittels Vorschubrollen 7, 8 längs einer Führungsbahn 9 schrittweise fortbewegt. Im Zuge der Führungsbahn 9 befinden sich eine Filtriereinrichtung 10 und eine Stanzeinrichtung 11.

Die Filtriereinrichtung 10 besteht aus einem unterhalb der Führungsbahn angeordneten Saugkopf 12 und einer oberhalb der Führungsbahn gegenüber dem Saugkopf angeordneten, vertikal beweglichen Glocke 13. Der Saugkopf 12 ist auf der Höhe der Führungsbahn 9 durch einen Filterträger 14. z.B. in Form einer Sinterglasplatte, abgeschlossen und über ein gesteuertes Ventil 15 mit einer nicht dargestellten Vakuumpumpe verbunden. Die Glocke 13 ist mit einem Hubmotor 16 verbunden, der die Glocke gegen den Saugkopf 12 auf den dazwischen liegenden Filterstreifen drücken kann, so dass die Filterstelle beidseitig abgedichtet wird. Am unteren Rand der Glocke kann ein Dichtungsring 17 vorgesehen sein. In die Glocke 13 ist eine Leitung 18 mit vorzugsweise höhenverstellbarer Mündung eingesetzt, welche über einen Schlauch 19 mit der Kanüle 2 der Entnahmevorrichtung direkt verbunden ist.

Die Stanzeinrichtung 11 weist einen Stanzstempel 20 und zu dessen Betätigung einen Hubmotor 21 auf. Damit wird an der Stanzöffnung 22 in der Führungsbahn 9 jeweils ein Scheibchen des Filterstreifens ausgestanzt. Ein Stössel 23 ist im Stanzstempel 20 längsbeweglich geführt und mit einem Hubmotor 24 verbunden. Der Stössel 23 befördert das ausgestanzte Scheibchen in ein darunter stehendes Probenaufnahmegefäss 25, das z.B. wiederum in einer Kette von Aufnahmegefässen schrittweise fortbewegt wird. Über einen Schlauch 26 wird dem Stössel 23 die Reagenzflüssigkeit zugeführt.

Die Filtrierstation arbeitet im Takt mit den nicht dargestellten Vorschubeinrichtungen für den Transport der Ansatzgefässe 1 und der Aufnahmegefässe 25. Zum Betrieb kann eine Programmsteuereinrichtung vorgesehen sein, welche die Tätigkeit der Hubmotoren 3, 16, 21, 24, des Antriebs der Vorschubrollen 7, 8 und das Ventil 15 steuert und beispielsweise vom ersten und letzten zur Entnahmeeinrichtung gelangenden Gefäss einer Kette von Probenansatzgefässen in Gang gesetzt bzw. angehalten wird. Damit ergibt sich z.B. folgende Arbeitsweise der Filtrierstation:

Im Ruhezustand befinden sich alle Hubmotoren 3, 16, 21 und 24 in der oberen Endlage, und das Ventil 15 ist geschlossen bzw. steht auf Entlüftung.

Sobald das erste Probenansatzgefäss 1 die Entnahmestelle erreicht, wird die Kanüle 2 in das Ansatzgefäss 1 und die Glocke 13 auf den stillstehenden Filterstreifen 5 abgesenkt. Anschliessend erfolgt die allenfalls erforderliche Zugabe, z.B. in Form einer Pufferlösung, über die Pipette 4. Vor Ende dieser Zugabe wird das Ventil 15 geöffnet, wodurch die Saugkraft der Vakuumpumpe zur Wirkung kommt und den Probenansatz aus dem Ansatzgefäss 1 über die Kanüle 2 und den Schlauch 19 zur Filterstelle innerhalb der Glocke 13 befördert. Infolge der pumpenlosen Verbindung zwischen Kanüle 2 und Glocke 13 erfolgt diese Übertragung innerhalb weniger Sekunden, so dass die Dauer des Einflusses einer allfälligen Zugabe auf die Probe in gewünschten Grenzen gehalten werden kann. Im Anschluss daran wird Reinigungsflüssigkeit in dosierten Schüben über die Pipette 4 eingeführt. Dabei wird das ganze Gemenge filtriert und das Filtrat über den Saugkopf 12 abgeführt. Bei diesem Prozess soll die Leitung 18 bezüglich der Glocke 13 in der Höhe so eingestellt sein, dass die Mündung mit dem an der Filterstelle sich sammelnden Gemenge nicht in Berührung kommt. Nach der Reinigung werden die Entnahmeeinrichtung und die Glocke 13 wieder angehoben, und das Ventil 15 wird geschlossen.

Nun werden die Gefässketten und der Filterstreifen 5 um einen Schritt vorgeschoben, so dass das nächste Ansatzgefäss 1 in die Entnahmestellung, das erste Probenaufnahmegefäss 25 in die Aufnahmestellung und die mit dem Filterrückstand belegte Filterstelle unter den Stanzstempel 20 zu stehen kommen.

Mit dem Stanzstempel 20 wird nun ein die belegte Filterstelle enthaltendes Scheibchen aus dem Filterstreifen 5 ausgestanzt, das danach durch den Stössel 23 in das Aufnahmegefäss 25 befördert wird. Während des Rückzugs des Stössels 23 wird durch diesen über den Schlauch 26 die Reagenzflüssigkeit, z.B. eine Scintillationsflüssigkeit im Falle radioimmunologischer Proben, zugeführt. Das Ende des Stössels 23 ist z.B. trompetenförmit aufgeweitet, damit das Filterscheibchen möglichst in Randnähe erfasst wird und beim Einführen in das Aufnahmegefäss 25 nicht mit der Aussenseite des Stössels in Kontakt kommen kann. Die Reagenzflüssigkeit dient zugleich zur Reinigung des Stössels.

Die Zufuhr der verschiedenen Flüssigkeiten über die Pipette 4 und den Schlauch 26 erfolgt z.B. durch wahlweise anschaltbare Dispenser.

Die Hubmotoren 3 und 16 können bei geeigneter Anordnung der Entnahmeeinrichtung und der Glocke 13 durch einen einzigen Hubmotor ersetzt werden.

Zum Aufpressen der Glocke 13 auf den Filterstreifen 5 ist z.B. eine Überdruckfeder vorgesehen.

Das Ausstanzen eines Filterscheibchens und das Filtrieren der nächsten Probe können gleichzeitig geschehen.

**Patentanspruch**

1. Vorrichtung zur automatischen Herstellung einer Reihe von Proben in zeitlicher Folge für die Analyse von Gemengen, bei der das jeweilige Gemenge einem Gefäss (1) mit flüssigem Probenansatz entnommen und auf einen schrittweise fortbewegten Filterstreifen (5) stellenweise abgesetzt, das Filtrat von der Rückseite des Filterstreifens (5) abgesaugt und der Filterrückstand für die Analyse präpariert wird, mit einer Einrichtung (2, 3) zur aufeinanderfolgenden Entnahme der Probenansätze aus einer Reihe von Gefässen (1), einer Einrichtung (7, 8) für den schrittweisen Vorschub des Filterstreifens (5) längs einer Führungsbahn (9), einer Filtriereinrichtung (10), die an einer ersten Stelle der Führungsbahn (9) angeordnet ist und einen Saugkopf (12) unterhalb der Führungsbahn und eine heb- und senkbare Glocke (13) oberhalb der Führungsbahn, gegenüber dem Saugkopf aufweist, wobei die mit der Entnahmeeinrichtung (2, 3) über eine Leitung (19) verbundene Glocke (13) während der Haltephase des Filterstreifens (5) gegen den Saugkopf auf den dazwischen liegenden Filterstreifen (5) drückt und damit die Filterstelle beidseitig abdichtet, ferner mit einer Stanzeinrichtung (11), die an einer zweiten, um einen Vorschubschritt in Vorschubrichtung von der Filtriereinrichtung (10) entfernten Stelle der Führungsbahn (9) angeordnet ist und zum Ausstanzen von die mit dem Filterrückstand belegte Filterstellen enthaltenden Scheibchen des Filterstreifens (5) dient, wobei im Stanzstempel (20) ein hohler, zur Beförderung der ausgestanzten Filterscheibchen in Probenaufnahmegefässe (25) und für die Zufuhr der Reagenzflüssigkeit vorgesehener Stössel (23) längsbeweglich gelagert ist und wobei die Führungsbahn (9) den Filterstreifen (5) zwischen der ersten und der zweiten Stelle der Führungsbahn (9) beidseitig abdeckt.

**Claim**

1. An apparatus for the automatic preparation of a series of samples, in time sequence, for the analysis of mixtures, wherein the particular mixture is taken from a container (1) with a liquid sample mixture and deposited at intervals on a filter strip (5) which is advanced step by step, the filtrate is drawn off from the rear of the filter strip (5) by suction and the filter residue is prepared for the analysis, having a device (2, 3) for the successive extraction of sample mixtures from a series of containers (1), a device (7, 8) for the step-by-step feed of the filter strip (5) along a guideway (9), a filtering device (10) which is disposed at a first point on the guideway (9) and comprises a suction head (12) below the guideway and a bell (13), which can be raised and lowered, above the guideway, opposite the suction head, the bell (13), which is connected to the extraction device (2, 3) through a pipeline (19) pressing, during the stop phase of the filter strip (5), against the suction head on the filter strip (5) situated in between and so sealing off the filter point at both sides, further having a punching device (11) which is disposed at a second point of the guideway (9) at a distance of one feed step in the feed direction from the filter device (10) and serves to punch out small discs of filter strip (5) containing the filter points occupied by the filter residue, a hollow push-rod (23) being mounted for longitudinal movement in the punch (20) to convey the punched-out filter discs into sample receiving containers (25) and to supply the reagent liquid, and the guideway (9) covering the filter strip (5) at both sides between the first and second points of the guideway (9).

**Revendication**

1. Installation pour la fabrication automatique d'une série d'échantillons successivement dans le temps, pour l'analyse de mélanges, dans laquelle le mélange en question est prélevé dans un récipient (1) contenant une préparation liquide de l'échantillon et déposé par emplacements sur une bande filtrante (5) qui avance par pas, dans laquelle le filtrat est aspiré par la face arrière de la bande filtrante (5) et dans laquelle le résidu de la filtration est préparé pour l'analyse, comportant un dispositif (2, 3) pour prélever successivement les préparations d'échantillons dans une série de récipients (1), un dispositif (7, 8) pour faire avancer par pas la bande filtrante (5) de long d'un chemin de guidage (9), un dispositif de filtration (10) qui est disposé à un premier emplacement du chemin de guidage (9) et qui présente une tête aspirante (12) en dessous du chemin de guidage et une cloche qui peut prendre un mouvement de monte et baisse (13), au-dessus du chemin de guidage, en face de la tête aspirante, étant précisé que la cloche, reliée au dispositif de prélèvement (2, 3) par une conduite (19), appuie, pendant la phase d'arrêt de la bande filtrante (5), en direction de la tête aspirante, sur la bande filtrante (5) située entre elles et assure ainsi l'étanchéité de l'emplacement de filtration, des deux côtés, comportant en outre un dispositif de découpage (11) qui est disposé à un second emplacement du chemin de guidage (9) éloigné, du dispositif de filtration (10), d'un pas d'avance dans le sens de l'avance et qui sert à découper des plaquettes de bande filtrante (5) présentant les emplacements qui contiennent le résidu de filtration, étant précisé que dans le poinçon de découpage (20) passe un poussoir creux (23) prévu pour transporter les plaquettes d'échantillon découpées dans des récipients de réception des échantillons (25) et pour amener le liquide de réaction, et étant précisé que le chemin de guidage (9) recouvre des deux côtés la bande filtrante (5) entre le premier emplacement et le second emplacement du chemin de guidage (9).